# FASCICULE DE BREVET EUROPEEN

(11) **EP 3 098 124 B1**
(45) Date de publication et mention de la délivrance du brevet: **15.05.2019**
(21) Numéro de dépôt: 16171557.8
(22) Date de dépôt: 26.05.2016
(51) Int. Cl.: B60T 7/06, B60R 21/09, G05G 1/32

(54) **ASSEMBLAGE DE DEUX PIECES AYANT UNE INCOMPATIBILITE DE SOUDURE**
MONTAGE VON ZWEI WERKSTÜCKEN, DIE EINE UNVEREINBARKEIT DER SCHWEISSNAHT AUFWEISEN
ASSEMBLY OF TWO PARTS NOT COMPATIBLE FOR WELDING

(30) Priorité: 27.05.2015 FR 1554749
(43) Date de publication de la demande: 30.11.2016
(73) Titulaire: Renault S.A.S., 92100 Boulogne-Billancourt (FR)
(72) Inventeur: KELOU, Hakim, 94350 Villiers sur Marne (FR)

(56) Documents cités:
- EP-A1- 1 243 456
- EP-A2- 1 582 419
- EP-A2- 2 107 442
- DE-A1-102006 014 228
- US-A1- 2005 172 754
- US-A1- 2005 241 473
- US-B2- 6 571 900

## Description

L'invention se rapporte à un assemblage de pièces ayant une incompatibilité de soudure.

Dans un véhicule automobile, il peut arriver que deux pièces destinées à être solidarisées l'une à l'autre et susceptibles d'être sollicitées mécaniquement l'une par rapport à l'autre, ne puissent pas être soudées entre elles pour des raisons d'incompatibilité de soudure. Cette situation peut par exemple être rencontrée dans un véhicule au niveau du fil empêchant la remontée des pédales lorsque ledit véhicule subit un choc frontal. En effet, ce fil est généralement métallique et vient se fixer sur un support fixe du véhicule.

Les demandes de brevet ci-dessous divulguent des systèmes comportant un fil venant se fixer sur un support fixe du véhicule.

La demande de brevet allemand DE 10 2006 014228 A1 divulgue un mécanisme de pédale pour véhicules automobiles, comportant un levier de pédale (4) rotatif autour d'un axe de pédale (5), une liaison entre le levier de la pédale (4) et une barre de protection (8) pour bloquer le levier de pédale lors d'une collision frontale. Un crochet (9) est fixée à la barre de protection et est supporté par l'essieu de la pédale ou par le support de palier. La barre anti-choc et l'unité à crochet sont formées de pièces en fil métallique plié, de pièces en forme de feuille et de pièces moulées. La barre de protection (8) est raccordée par un pivot à une plaque de montage (13) ou bien est soudée à plaque de montage (13).

La demande de brevet européenne EP 2 107 442 divulgue un système de pédale, qui comporte deux leviers de pédale (4, 5, 6) et un bloc de roulement (11, 12) qui est fixé sur une paroi avant du châssis du véhicule automobile. Une tige antichoc (15) est formée par une tige de fixation (15a). La tige de fixation repose en grande partie sur une extrémité d'une partie du corps fixe et est fendue en deux tiges de support à l'autre extrémité, les tiges de support s'étendant dans le sens transversal du véhicule de manière librement saillante, évitant ainsi l'intrusion des pédales dans l'habitacle.

Ce fil est sollicité mécaniquement et doit donc être solidement arrimé audit support. Or, le fil ne peut pas être soudé au support, soit pour des incompatibilités de soudage, soit pour des raisons liées à un risque de cassure de la soudure. Un assemblage de deux pièces selon l'invention est facile et rapide à mettre en oeuvre, et permet aux dites pièces d'être solidement arrimées l'une à l'autre.

L'invention a pour objet un assemblage d'un fil empêchant la remontée des pédales d'un véhicule lorsque ledit véhicule subit un choc frontal, et d'un support d'un impacteur de pédales fixé à une traverse de planche de bord. La principale caractéristique d'un assemblage selon l'invention est que ledit support comprend un premier logement allongé destiné à recevoir un premier segment du fil, ledit premier segment étant introduit à force dans ledit premier logement pour réaliser une liaison par clipsage entre ledit fil et ledit support. Autrement dit, la liaison entre le fil et le support est solide car leur surface de contact, impliquant notamment la longueur du premier segment, est étendue. Le premier segment peut, soit représenter la totalité du fil, soit ne le représenter que partiellement en supposant qu'il possède d'autres segments. De plus, le premier segment peut être, soit totalement logé dans le premier logement, soit partiellement logé dans ledit premier logement en débordant de celui-ci. Le premier segment peut être, soit rectiligne, soit incurvé. Le fait que le premier segment soit introduit à force dans le premier logement signifie qu'il faut produire un certain effort pour réaliser cette introduction, sans pour autant avoir recours à un outillage spécifique ou à une manipulation compliquée. Une simple intervention manuelle suffit. Il est préférentiellement supposé que le support possède des aptitudes à la déformation élastique, pour notamment permettre l'introduction à force du premier segment dans le premier logement. Ce type d'assemblage est particulièrement adapté à fil et à un support qui n'ont pas de compatibilité de soudure entre eux.

Avantageusement, le premier logement et le premier segment sont rectilignes, ledit premier logement présentant une ouverture dont les dimensions sont inférieures à celles dudit premier segment. Ladite ouverture matérialise le passage par lequel est introduit le premier segment dans le premier logement. De cette manière, l'introduction du premier segment est effectuée en élargissant momentanément l'ouverture pour permettre le passage du premier segment dont les dimensions sont supérieures à celles de ladite ouverture. Une fois que le premier segment a été complètement introduit dans le premier logement pour occuper une position définitive, l'ouverture dudit logement se rétrécit pour retrouver une taille normale.

De façon préférentielle, le support comprend un deuxième logement rectiligne destiné à recevoir un deuxième segment filaire du fil, et en ce que ledit deuxième segment est introduit à force dans ledit deuxième logement. La présence du deuxième segment et du deuxième logement accroît les conditions de contact entre le fil et le support. Le premier et le deuxième segment peuvent être ou non en continuité l'un de l'autre, et être ou non orientés selon la même direction.

Préférentiellement, le premier logement et le deuxième logement sont perpendiculaires.

De façon avantageuse, le premier segment et le deuxième segment sont en continuité l'un de l'autre et constituent une extrémité du fil, le premier segment constituant la partie terminale dudit fil. Autrement dit, le deuxième segment est intercalé entre le premier segment et le reste du fil.

Avantageusement, le support est plan et présente deux faces opposée, le premier logement étant réalisé dans l'une desdites faces et le deuxième logement étant réalisé dans l'autre face. De cette manière, un tel arrangement permet de neutraliser un effort en torsion qui se produirait au niveau du deuxième segment autour de son axe longitudinal, car le premier segment bloquerait le fil en rotation, et l'empêcherait de se désolidariser du support.

De façon préférentielle, le support est de faible épaisseur, le premier logement et le deuxième logement étant tous les deux réalisés par emboutissage dudit support.

Préférentiellement, le fil et le support sont métalliques. De façon préférentielle, ces deux pièces sont réalisées dans des métaux différents, qui ne sont pas compatibles en soudure.

L'invention a pour autre objet un véhicule automobile comprenant au moins un assemblage conforme à l'invention.

Un assemblage selon l'invention présente l'avantage de pouvoir être mis en oeuvre facilement et rapidement, dans la mesure où il ne nécessite aucun outillage spécifique ni de manipulations compliquées requérant de la précision. Il a de plus l'avantage de présenter une grande cohésion, l'empêchant d'être défait facilement sous l'effet de sollicitations telles que par exemple des vibrations souvent présentes dans un véhicule automobile en phase de roulage.

On donne ci-après, une description détaillée, d'un mode de réalisation préféré d'un assemblage selon l'invention, en se référant aux figures 1 à 3.
- La figure 1 est une vue en perspective d'un assemblage selon l'invention comprenant un fil empêchant la remontée des pédales dans le cas d'un choc frontal de véhicule, et un support d'un impacteur de pédale,
- La figure 2 est une vue en coupe transversale d'un premier segment du fil placé dans un premier logement du support,
- La figure 3 est une vue en coupe transversale d'un deuxième segment du fil placé dans un deuxième logement du support,
- La figure 4 est une vue complétée de la figure 1, montrant le fil, le support et une traverse de planche de bord.

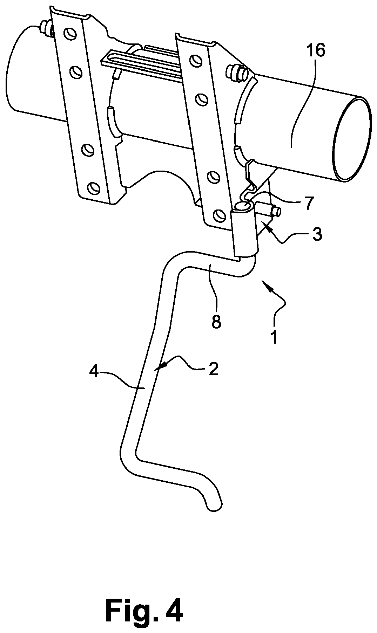

En se référant à la figure 4, un assemblage 1 selon l'invention, comprend un fil 2 rigide empêchant la remontée d'une pédale dans le cas d'un choc frontal accidentel du véhicule contre un obstacle, et un support 3 d'un impacteur de pédale, fixé à une traverse 16 de planche de bord.

Le fil 2 et le support 3 constituent deux pièces réalisées dans deux métaux différents, qui ne sont pas compatibles en soudure.

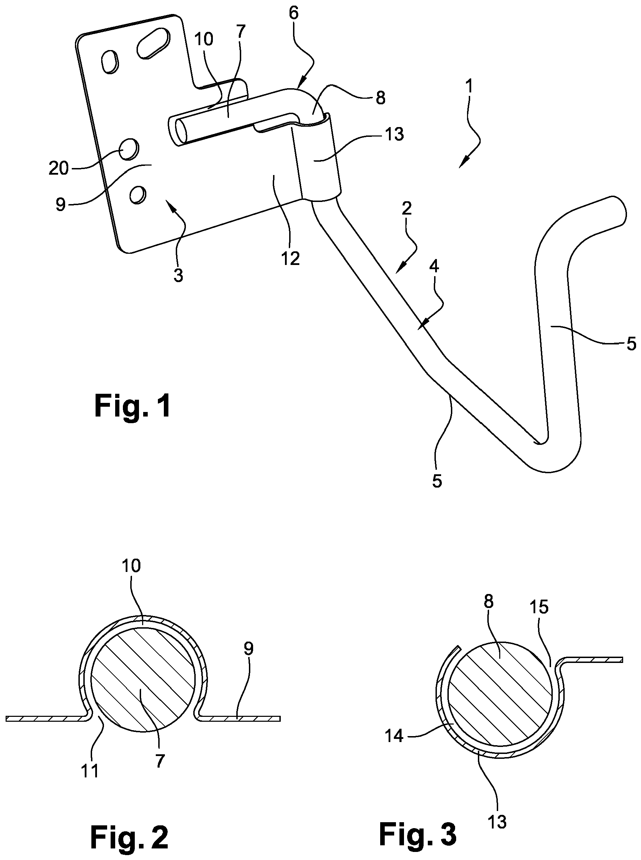

En se référant à la figure 1, le fil 2 comprend un corps filaire 4 constitué de plusieurs segments 5 rectilignes non alignés, ledit corps 4 étant prolongé par une extrémité 6 comportant un premier segment 7 droit et un deuxième segment 8 droit, lesdits deux segments 7, 8 étant perpendiculaires entre eux. Autrement dit, ladite extrémité 6 possède une forme en L et le deuxième segment 8 est inséré entre le premier segment 7 terminal et le corps 4 du fil 2. Le fil 2 est cylindrique, et comporte un diamètre constant sur toute sa longueur, ladite longueur incluant le corps 4 et l'extrémité 6 en forme de L. Le premier segment 7 et le deuxième segment 8 sont allongés et sont définis chacun par un axe longitudinal.

Le support 3 comprend un corps plan 9 de faible épaisseur, ledit corps 9 comportant une pluralité d'ouvertures 20 pouvant avoir des formes différentes pour notamment permettre le passage d'organes de fixation adaptés, tels que par exemple des vis, afin d'arrimer ledit support 3 sur la traverse 16 de planche de bord. Ce corps 9 est essentiellement délimité par deux surfaces opposées et parallèles.

En se référant aux figures 1 et 2, le corps 9 du support 3 comprend un premier logement 10 allongé, pratiqué sur l'une de ses deux surfaces, ledit premier logement 10 étant assimilable à un renfoncement cylindrique ouvert. Ce renfoncement 10 peut par exemple être obtenu par emboutissage du support 3 et comporte une ouverture 11 dont la largeur est inférieure au diamètre du fil2. Le premier segment terminal 7 du fil 2 est ainsi introduit à force dans le premier logement 10, de manière à ce que l'axe longitudinal dudit premier segment 7 soit parallèle à l'axe longitudinal dudit premier logement 10. L'insertion de ce premier segment 7 dans ledit premier logement 10 demande un certain effort car ledit premier segment 7 est plus large que l'ouverture 11 dudit premier logement 10. Une fois que ledit premier segment 7 a été complètement introduit dans ledit premier logement 10, l'ouverture 11 qui s'était momentanément élargie lors du passage dudit premier segment 7 reprend son contour initial en se rétrécissant. Le métal constituant le support 3 possède donc des aptitudes à la déformation élastique.

En se référant aux figures 1 et 3, le corps 9 du support 3 est prolongé par une patte 12 se terminant par un bord incurvé 13 délimitant un espace cylindrique ouvert 14. Cet espace 14 est allongé et définit un deuxième logement destiné à recevoir le deuxième segment 8 du fil 2. L'axe longitudinal de ce deuxième logement 14 est perpendiculaire à l'axe longitudinal du premier logement 10. Ce deuxième logement 14 comporte une ouverture 15 dont la largeur est inférieure au diamètre du fil 2. Le deuxième segment 8 du fil 2 est ainsi introduit à force dans le deuxième logement 14, de manière à ce que l'axe longitudinal dudit deuxième segment 8 soit parallèle à l'axe longitudinal dudit deuxième logement 14. L'insertion de ce deuxième segment 8 dans ledit deuxième logement 14 demande un certain effort car ledit deuxième segment 8 est plus large que l'ouverture 15 dudit deuxième logement 14. Une fois que ledit deuxième segment 8 a été complètement introduit dans ledit deuxième logement 14, l'ouverture 15 qui s'était momentanément élargie lors du passage dudit deuxième segment 8 reprend son contour initial en se rétrécissant.

Il est à noter que par rapport au plan définissant le corps 9 du support 3, les parois délimitant le premier logement 10 et le deuxième logement 14 sont en opposition.

La disposition des deux logements 10, 14 permet au fil 2 une fois qu'il a été fixé au support 3, d'encaisser des efforts de torsion et de flexion sans risque d'être désolidarisé dudit support 3. En particulier, un effort de torsion exercé au niveau du deuxième segment 8 autour de son axe longitudinal est neutralisé par le premier segment 7, qui, en venant en butée contre le support 3, empêche une rotation du fil 2 et donc une désolidarisation de celui-ci par rapport audit support 3.

## Revendications

1. Assemblage (1) d'un fil (2) empêchant la remontée des pédales d'un véhicule lorsque ledit véhicule subit un choc frontal, et d'un support (3) d'un impacteur de pédales fixé à une traverse (16) de planche de bord, **caractérisé en ce que** ledit support (3) comprend un premier logement (10) allongé destiné à recevoir un premier segment (7) du fil (2), et **en ce que** ledit premier segment (7) est introduit à force dans ledit premier logement (10) pour réaliser une liaison par clipsage entre ledit fil (2) et ledit support (3).

2. Assemblage selon la revendication 1 **caractérisé en ce que** le premier logement (10) et le premier segment (7) sont rectilignes, et **en ce que** ledit premier logement (10) présente une ouverture (11) dont les dimensions sont inférieures à celles dudit premier segment (7).

3. Assemblage selon la revendication 2, **caractérisé en ce que** le support (3) comprend un deuxième logement (14) rectiligne destiné à recevoir un deuxième segment (8) filaire du fil (2), et **en ce que** ledit deuxième segment (8) est introduit à force dans ledit deuxième logement (14).

4. Assemblage selon la revendication 3, **caractérisé en ce que** le premier logement (10) et le deuxième logement (14) sont perpendiculaires.

5. Assemblage selon l'une quelconque des revendications 3 ou 4, **caractérisé en ce que** le premier segment (7) et le deuxième segment (8) sont en continuité l'un de l'autre et constituent une extrémité (6) du fil (2), et **en ce que** le premier segment (7) constitue la partie terminale dudit fil (2).

6. Assemblage selon l'une quelconque des revendications 3 à 5, **caractérisé en ce que** le support (3) est plan et présente deux faces opposée, et **en ce que** le premier logement (10) est réalisé dans l'une desdites faces et le deuxième logement (14) est réalisé dans l'autre face.

7. Assemblage selon l'une des revendications 3 à 6, **caractérisé en ce que** le support (3) est de faible épaisseur, et **en ce que** le premier logement (10) et le deuxième logement (14) sont réalisés tous les deux par emboutissage dudit support(3).

8. Assemblage selon l'une quelconque des revendications 1 à 7, **caractérisé en ce que** le fil (2) et le support (3) sont métalliques.

9. Véhicule automobile comprenant au moins un assemblage (1) conforme à l'une quelconque des revendications 1 à 8.

## Patentansprüche

1. Anordnung (1) eines Drahtes (2), der die Verschiebung der Pedale eines Fahrzeugs nach oben verhindert, wenn das Fahrzeug einen Frontalzusammenstoß erleidet, und eines Halters (3) eines Stoßaufnehmers von Pedalen, der an einem Querträger (16) eines Armaturenbretts befestigt ist, **dadurch gekennzeichnet, dass** der Halter (3) eine erste lang gestreckte Aufnahme (10) umfasst, die dazu bestimmt ist, ein erstes Segment (7) des Drahtes (2) aufzunehmen, und dadurch, dass das erste Segment (7) unter Kraftanwendung in die erste Aufnahme (10) eingesetzt wird, um eine Klipsverbindung zwischen dem Draht (2) und dem Halter (3) herzustellen.

2. Anordnung nach Anspruch 1, **dadurch gekennzeichnet, dass** die erste Aufnahme (10) und das erste Segment (7) geradlinig sind, und dadurch, dass die erste Aufnahme (10) eine Öffnung (11) aufweist, deren Abmessungen kleiner als diejenigen des ersten Segments (7) sind.

3. Anordnung nach Anspruch 2, **dadurch gekennzeichnet, dass** der Halter (3) eine zweite geradlinige Aufnahme (14) umfasst, die dazu bestimmt ist, ein zweites Drahtsegment (8) des Drahtes (2) aufzunehmen, und dadurch, dass das zweite Segment (8) unter Kraftanwendung in die zweite Aufnahme (14) eingesetzt wird.

4. Anordnung nach Anspruch 3, **dadurch gekennzeichnet, dass** die erste Aufnahme (10) und die zweite Aufnahme (14) zueinander senkrecht sind.

5. Anordnung nach einem der Ansprüche 3 oder 4, **dadurch gekennzeichnet, dass** sich das erste Segment (7) und das zweite Segment (8) aneinander anschließen und ein Ende (6) des Drahtes (2) darstellen, und dadurch, dass das erste Segment (7) den Endabschnitt des Drahtes (2) darstellt.

6. Anordnung nach einem der Ansprüche 3 bis 5, **dadurch gekennzeichnet, dass** der Halter (3) eben ist und zwei einander gegenüberliegende Seiten aufweist, und dadurch, dass die erste Aufnahme (10) in einer dieser Seiten hergestellt ist und die zweite Aufnahme (14) in der anderen Seite hergestellt ist.

7. Anordnung nach einem der Ansprüche 3 bis 6, **dadurch gekennzeichnet, dass** der Halter (3) von geringer Dicke ist, und dadurch, dass die erste Aufnahme (10) und die zweite Aufnahme (14) beide durch Tiefziehen des Halters (3) hergestellt sind.

8. Anordnung nach einem der Ansprüche 1 bis 7, **dadurch gekennzeichnet, dass** der Draht (2) und der Halter (3) aus Metall bestehen.

9. Kraftfahrzeug, welches wenigstens eine Anordnung (1) gemäß einem der Ansprüche 1 bis 8 umfasst.

## Claims

1. Assembly (1) of a wire (2) that prevents the pedals of a vehicle from moving up when the said vehicle experiences a frontal impact, and of a support (3) of a pedal impactor fixed to a dash panel crossmember (16), **characterized in that** the said support (3) comprises an elongate first housing (10) intended to accept a first segment (7) of the wire (2), and **in that** the said first segment (7) is forcibly introduced into the said first housing (10) in order to achieve a clip-fastened connection between the said wire (2) and the said support (3).

2. Assembly according to Claim 1, **characterized in that** the first housing (10) and the first segment (7) are rectilinear, and **in that** the said first housing (10) has an opening (11), the dimensions of which are smaller than those of the said first segment (7).

3. Assembly according to Claim 2, **characterized in that** the support (3) comprises a rectilinear second housing (14) intended to accept a filamentary second segment (8) of the wire (2), and **in that** the said second segment (8) is forcibly introduced into the said second housing (14).

4. Assembly according to Claim 3, **characterized in that** the first housing (10) and the second housing (14) are perpendicular.

5. Assembly according to either one of Claims 3 and 4, **characterized in that** the first segment (7) and the second segment (8) are in continuity with one another and constitute one end (6) of the wire (2), and **in that** the first segment (7) constitutes the terminal portion of the said wire (2).

6. Assembly according to any one of Claims 3 to 5, **characterized in that** the support (3) is planar and has two opposite faces, and **in that** the first housing (10) is produced in one of the said faces and the second housing (14) is produced in the other face.

7. Assembly according to any one of Claims 3 to 6, **characterized in that** the support (3) is of small thickness, and **in that** the first housing (10) and the second housing (14) are both produced by an operation of pressing the said support (3).

8. Assembly according to any one of Claims 1 to 7, **characterized in that** the wire (2) and the support (3) are made of metal.

9. Motor vehicle comprising at least one assembly (1) according to any one of Claims 1 to 8.
